# FASCICULE DE BREVET EUROPEEN

(11) **EP 4 217 237 B1**
(45) Date de publication et mention de la délivrance du brevet: **11.12.2024**
(21) Numéro de dépôt: 21777554.3
(22) Date de dépôt: 21.09.2021
(51) Int. Cl.: B60R 11/02, H04R 7/04, B60R 13/02

(54) **PANNEAU DE GARNISSAGE INTÉRIEUR DE VÉHICULE AUTOMOBILE**
INNENVERKLEIDUNGSPANEEL FÜR KRAFTFAHRZEUG
MOTOR VEHICLE INNER TRIM PANEL

(30) Priorité: 24.09.2020 FR 2009728
(43) Date de publication de la demande: 02.08.2023
(73) Titulaire: Treves Audio, 51100 Reims (FR)
(72) Inventeur: BRILLON, Eric, 75008 Paris (FR); DUVAL, Arnaud, 75008 Paris (FR); THOME, Jean-Philippe, 63122 Saint-Genès-Champelle (FR)
(74) Mandataire: Sayettat, Julien Christian
(86) Numéro de dépôt international: PCT/EP2021/075950
(87) Numéro de publication internationale: WO 2022/063781

(56) Documents cités:
- EP-A1- 1 007 390
- EP-A2- 1 210 846
- US-A- 5 125 033

## Description

L'invention concerne un panneau de garnissage intérieur de véhicule automobile pourvu d'un transducteur électrodynamique ou magnétostrictif.

Il est connu de réaliser un tel panneau permettant de propager au sein d'un habitacle automobile le signal issu d'un amplificateur, l'utilisation d'un transducteur en lieu et place d'un haut-parleur permettant notamment un gain de poids et de place. Le document EP1007390A1, divulgue un panneau de garnissage intérieur de véhicule automobile, ledit panneau comprenant une âme moulée, ledit panneau comprenant en outre: une embase surmoulée par ladite âme dans une zone de fixation, un transducteur électrodynamique ou magnétostrictif, ledit transducteur étant en outre pourvu de deux connecteurs électriques,

Il apparait diverses problématiques lorsqu'un tel agencement est mis en oeuvre : simplifier le montage, optimiser la transmission du signal de l'amplificateur vers le panneau (par l'intermédiaire du transducteur), assurer la fiabilité des contacts électriques, supprimer des risques de vibrations parasites.

L'invention a pour but de proposer un panneau permettant de concilier ces diverses exigences.

A cet effet, l'invention propose un panneau de garnissage intérieur de véhicule automobile, ledit panneau comprenant une âme moulée, ledit panneau comprenant en outre :
- une embase surmoulée par ladite âme dans une zone de fixation, ladite embase étant pourvue de harpons saillant de ladite âme,
- une bague pourvue de moyens de réception en emboitement desdits harpons, de manière à associer ladite bague à ladite embase, ladite bague étant en outre pourvue de deux connecteurs électriques destinées à être reliées aux sorties d'un amplificateur, l'orifice central de ladite bague étant pourvu d'un filetage,
- un transducteur électrodynamique ou magnétostrictif qui est pourvu d'une partie de fixation en forme générale de cylindre fileté vissé dans ledit orifice, l'extrémité libre de ladite partie de fixation prenant appui dans ladite zone de manière à créer un effort d'écartement entre ladite bague et ladite embase assurant un contact serrant entre lesdits harpons et lesdits moyens de réception, ledit transducteur étant en outre pourvu de deux connecteurs électriques réciproques sur lesquels prennent respectivement appui chacun desdits connecteurs.

Avec l'agencement proposé :
- le montage du transducteur sur le panneau est très simple puisqu'il se résume à l'emboitement de la bague et au vissage du transducteur sur cette dernière, la course de rotation pouvant être définie de faible secteur angulaire afin de simplifier encore le montage,
- le fait de noyer l'embase dans l'âme permet d'assurer un contact surfacique continu, et non ponctuel (comme ce serait par exemple le cas dans une fixation de l'embase par vis créant une lame d'air entre ladite embase et ladite âme), entre ladite embase et le panneau, et d'optimiser ainsi la transmission du signal de l'amplificateur vers le panneau par l'intermédiaire du transducteur,
- des contacts électriques optimaux découlent de l'opération de vissage qui permet de mettre en appui réciproque les contacteurs et contacteurs réciproques,
- l'extrémité libre de la partie de fixation prenant appui dans la zone de fixation permet de créer un effort d'écartement entre la bague et l'embase et d'assurer ainsi un contact serrant entre lesdits harpons et lesdits moyens de réception, ce qui permet d'éviter les jeux entre embase et bague et entre bague et transducteur, et donc d'éviter les vibrations parasites.

D'autres particularités et avantages de l'invention apparaîtront dans la description qui suit, faite en référence aux figures jointes, dans lesquelles :

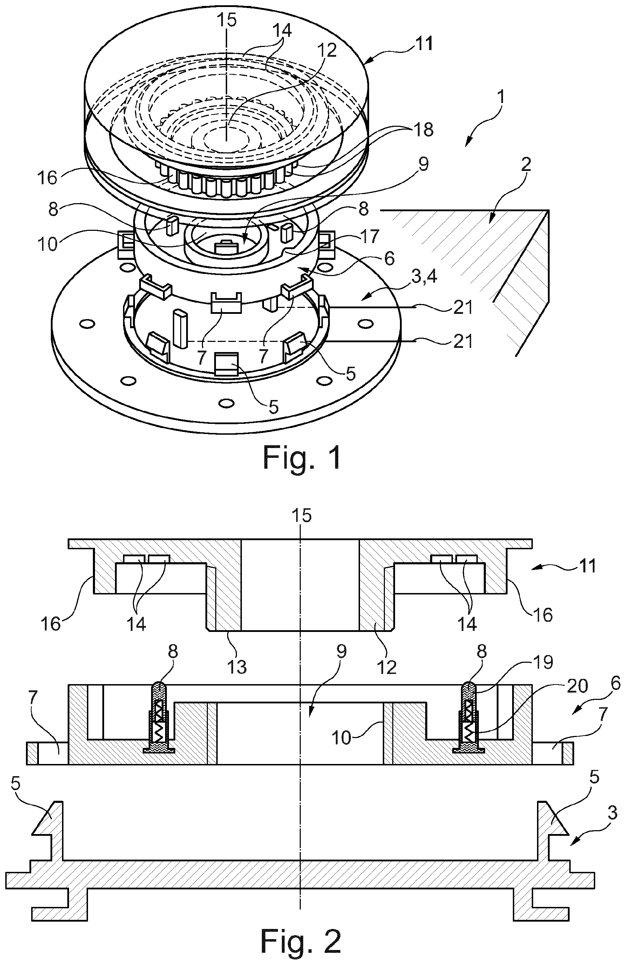

[Fig.1] est une vue schématique en perspective partielle éclatée et en semi transparence d'un panneau selon une réalisation,
[Fig.2] est une vue schématique en coupe partielle éclatée du panneau de la figure 1,

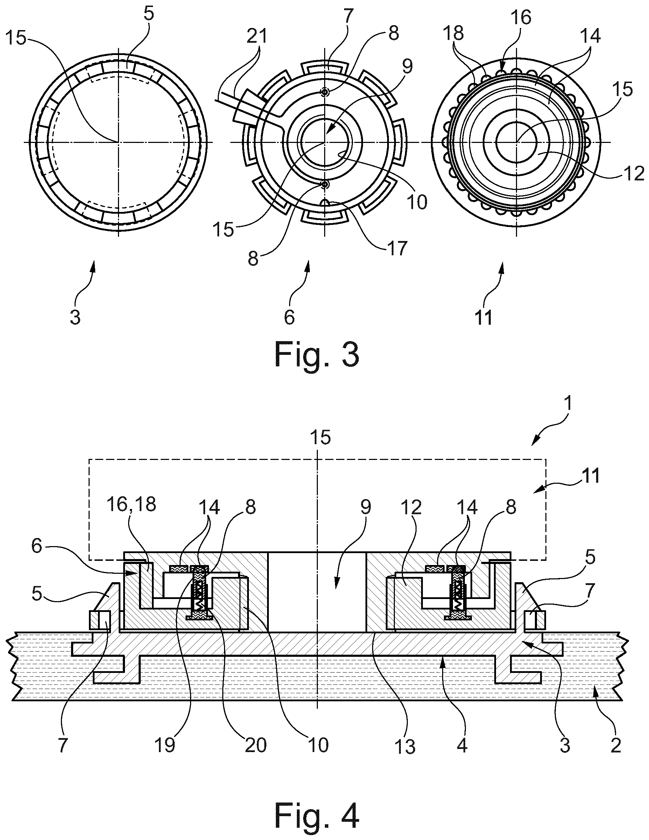

[Fig.3] est une vue schématique de face de respectivement l'embase, la bague et le transducteur du panneau de la figure 1,
Fig.4] est une vue schématique en coupe partielle non éclatée du panneau de la figure 1,

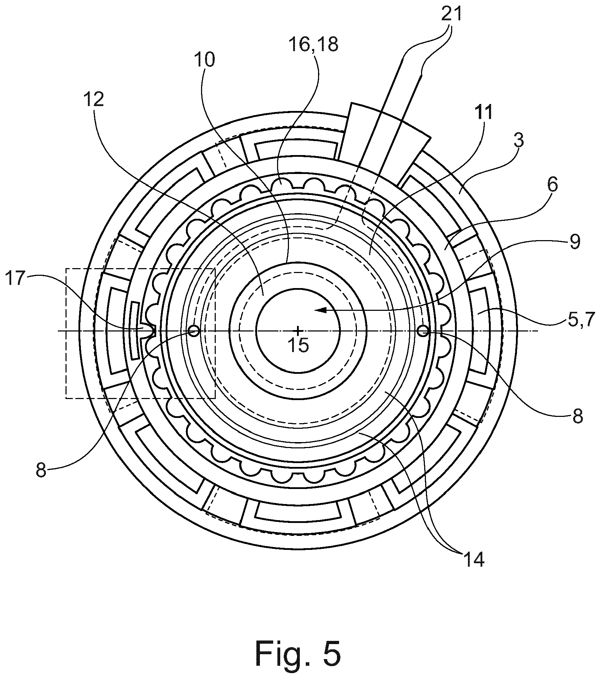

[Fig.5] est une vue schématique de face correspondant à la figure 4.

En référence aux figures, on décrit un panneau 1 de garnissage intérieur de véhicule automobile - par exemple une tablette de recouvrement d'un compartiment à bagages, un couvercle de bac de rangement ou encore une coque arrière de dossier -, ledit panneau comprenant une âme 2 moulée, ledit panneau comprenant en outre :
- une embase 3 - notamment en matériau plastique moulé - surmoulée par ladite âme dans une zone de fixation 4, ladite embase étant pourvue de harpons 5 saillant de ladite âme,
- une bague 6 - notamment en matériau plastique moulé - pourvue de moyens - disposés ici en périphérie de ladite bague - de réception 7 en emboitement desdits harpons - lesdits moyens étant disposés ici en périphérie de ladite bague -, de manière à associer ladite bague à ladite embase, ladite bague étant en outre pourvue de deux connecteurs électriques 8 destinées à être reliées aux sorties d'un amplificateur, l'orifice central 9 de ladite bague étant pourvu d'un filetage 10,
- un transducteur 11 électrodynamique ou magnétostrictif qui est pourvu d'une partie de fixation 12 - notamment en matériau plastique moulé - en forme générale de cylindre fileté vissé dans ledit orifice, l'extrémité libre 13 de ladite partie de fixation prenant appui dans ladite zone - sur ladite embase dans la réalisation représentée, ou encore sur l'âme en réalisation non représentée quand ladite embase est noyée dans ladite âme - de manière à créer un effort d'écartement entre ladite bague et ladite embase assurant un contact serrant entre lesdits harpons et lesdits moyens de réception, ledit transducteur étant en outre pourvu de deux connecteurs électriques réciproques 14 sur lesquels prennent respectivement appui chacun desdits connecteurs.

L'âme 2 est notamment à base de mousse de polyuréthanne rigide ou semi-rigide, c'est à dire une mousse non élastiquement compressible (contrairement aux mousses utilisées par exemple pour réaliser des coussins de sièges), ladite mousse ne pouvant retrouver sa géométrie initiale après avoir été comprimée de 50 % de son épaisseur initiale.

L'âme 2 est par exemple sous la forme :
- d'un bloc de mousse de polyuréthanne renforcé par des fibres de verre,
- ou bien d'une plaque en « nid d'abeille », notamment en carton, dont les deux faces sont recouvertes chacune d'une nappe de fibres de verre noyée dans de la mousse de polyuréthanne rigide.

Selon la réalisation représentée, l'extrémité libre 13 s'inscrit dans un plan prenant appui dans la zone de fixation 4 s'inscrivant dans le même plan, de manière à assurer un contact surfacique entre les deux permettant d'optimiser la transmission du signal issu de l'amplificateur.

Selon la réalisation représentée, les connecteurs 8 - respectivement ou les connecteurs réciproques 14 en variante non représentée - sont sous forme de bornes et les connecteurs réciproques 14 - respectivement ou les connecteurs 8 en variante non représentée - sous forme de pistes concentriques, ce qui permet de garantir le contact électrique entre les deux quelle que soit la course angulaire effectuée pour finaliser le vissage du transducteur 11.

Selon la réalisation représentée, les bornes sont sous forme de plots 19 montés sur ressort 20, de manière à garantir le contact électrique avec chaque piste correspondante.

En variante non représentée, les bornes peuvent être sous forme de lames en métal à ressort se plaquant contre les pistes correspondantes, de manière à garantir le contact électrique avec lesdites pistes.

En particulier, les pistes s'étendent au choix :
- soit, dans la réalisation représentée, selon deux secteurs angulaires parallèles - qui s'étendent sur 360° dans la réalisation représentée -, les bornes étant disposées à des cotes radiales - par rapport à l'axe de vissage 15 - correspondant à celles de chacun desdits secteurs,
- soit, dans une réalisation non représentée, selon deux secteurs angulaires disposés dans le prolongement l'un de l'autre, lesdites bornes étant disposés selon deux positions angulaires différentes et selon la cote radiale desdits secteurs.

Selon la réalisation représentée, le transducteur 11 - respectivement ou la bague 6 en variante non représentée - est pourvu d'une crémaillère circulaire coopérant avec un ergot 17 issu de la bague 6 - respectivement ou du transducteur 11 en variante non représentée -, ledit ergot étant agencé de sorte que le vissage de la partie de fixation 12 requière un effort seuil pour que ledit ergot passe d'un cran 18 à l'autre de ladite crémaillère, afin d'empêcher un dévissage intempestif dudit transducteur.

Selon une réalisation partiellement représentée, le panneau 1 comprend en outre deux câbles 21 de connexion à un amplificateur, lesdits câbles étant reliés aux connecteurs 8, ledit panneau comprenant en outre une tranchée de passage desdits câbles ménagée dans l'âme 2.

## Revendications

1. Panneau (1) de garnissage intérieur de véhicule automobile, ledit panneau comprenant une âme (2) moulée, ledit panneau comprenant en outre :
• une embase (3) surmoulée par ladite âme dans une zone de fixation (4), ladite embase étant pourvue de harpons (5) saillant de ladite âme,
• une bague (6) pourvue de moyens de réception (7) en emboitement desdits harpons, de manière à associer ladite bague à ladite embase, ladite bague étant en outre pourvue de deux connecteurs électriques (8) destinées à être reliées aux sorties d'un amplificateur, l'orifice central (9) de ladite bague étant pourvu d'un filetage (10),
• un transducteur (11) électrodynamique ou magnétostrictif qui est pourvu d'une partie de fixation (12) en forme générale de cylindre fileté vissé dans ledit orifice, l'extrémité libre (13) de ladite partie de fixation prenant appui dans ladite zone de manière à créer un effort d'écartement entre ladite bague et ladite embase assurant un contact serrant entre lesdits harpons et lesdits moyens de réception, ledit transducteur étant en outre pourvu de deux connecteurs électriques réciproques (14) sur lesquels prennent respectivement appui chacun desdits connecteurs.

2. Panneau selon la revendication 1, **caractérisé en ce que** l'âme (2) est à base de mousse de polyuréthanne rigide ou semi-rigide.

3. Panneau selon l'une des revendications 1 ou 2, **caractérisé en ce que** l'extrémité libre (13) s'inscrit dans un plan prenant appui dans la zone de fixation (4) s'inscrivant dans le même plan, de manière à assurer un contact surfacique entre les deux permettant d'optimiser la transmission du signal issu de l'amplificateur.

4. Panneau selon l'une quelconque des revendications 1 à 3, **caractérisé en ce que** les connecteurs (8) - respectivement ou les connecteurs réciproques (14) - sont sous forme de bornes et les connecteurs réciproques (14) - respectivement ou les connecteurs (8) - sous forme de pistes concentriques.

5. Panneau selon la revendication 4, **caractérisé en ce que** les bornes sont sous forme de plots (19) montés sur ressort (20), de manière à garantir le contact électrique avec chaque piste correspondante.

6. Panneau selon la revendication 4, **caractérisé en ce que** les bornes sont sous forme de lames en métal à ressort se plaquant contre les pistes correspondantes, de manière à garantir le contact électrique avec lesdites pistes.

7. Panneau selon l'une quelconque des revendications 4 à 6, **caractérisé en ce que** les pistes s'étendent au choix :
• soit selon deux secteurs angulaires parallèles, les bornes étant disposées à des cotes radiales correspondant à celles de chacun desdits secteurs,
• soit selon deux secteurs angulaires disposés dans le prolongement l'un de l'autre, lesdites bornes étant disposés selon deux positions angulaires différentes et selon la cote radiale desdits secteurs.

8. Panneau selon l'une quelconque des revendications précédentes, **caractérisé en ce que** le transducteur (11) - respectivement ou la bague (6) - est pourvu d'une crémaillère (16) circulaire coopérant avec un ergot (17) issu de la bague - respectivement ou du transducteur (11) -, ledit ergot étant agencé de sorte que le vissage de la partie de fixation (12) requière un effort seuil pour que ledit ergot passe d'un cran (18) à l'autre de ladite crémaillère, afin d'empêcher un dévissage intempestif dudit transducteur.

9. Panneau selon l'une quelconque des revendications précédentes, **caractérisé en ce qu'**il comprend en outre deux câbles (21) de connexion à un amplificateur, lesdits câbles étant reliés aux connecteurs (8), ledit panneau comprenant en outre une tranchée de passage desdits câbles ménagée dans l'âme (2).

## Patentansprüche

1. Innenverkleidungspaneel (1) für ein Kraftfahrzeug, wobei das Paneel einen geformten Kern (2) umfasst, wobei das Paneel ferner Folgendes umfasst:
• eine Basis (3), die in einem Befestigungsbereich (4) von dem Kern umspritzt ist, wobei die Basis mit Widerhaken (5) versehen ist, die aus dem Kern hervorstehen,
• einen Ring (6), der mit Aufnahmemitteln (7) versehen ist, die mit den Widerhaken in Eingriff stehen, um den Ring mit der Basis zu verbinden, wobei der Ring ferner mit zwei elektrischen Anschlüssen (8) versehen ist, die dazu bestimmt sind, mit den Ausgängen eines Verstärkers verbunden zu werden, wobei die zentrale Öffnung (9) des Rings mit einem Gewindegang (10) versehen ist,
• einen elektrodynamischen oder magnetostriktiven Wandler (11), der mit einem Befestigungsabschnitt (12) in allgemeiner Form eines Gewindezylinders versehen ist, der in die Öffnung eingeschraubt ist, wobei das freie Ende (13) des Befestigungsabschnitts derart in dem Bereich anliegt, dass es eine Trennkraft zwischen dem Ring und der Basis erzeugt, die einen Klemmkontakt zwischen den Widerhaken und den Aufnahmemitteln sicherstellt, wobei der Wandler ferner mit zwei wechselseitigen elektrischen Anschlüssen (14) versehen ist, auf denen jeder der Anschlüsse jeweils anliegt.

2. Paneel nach Anspruch 1, **dadurch gekennzeichnet, dass** der Kern (2) auf starrem oder halbstarrem Polyurethanschaum basiert.

3. Paneel nach einem der Ansprüche 1 oder 2, **dadurch gekennzeichnet, dass** das freie Ende (13) in einer Ebene eingefasst ist, die in dem Befestigungsbereich (4) anliegt, der in derselben Ebene eingefasst ist, um einen Oberflächenkontakt zwischen den beiden sicherzustellen, um das Optimieren der Übertragung des vom Verstärker ausgegebenen Signals zu ermöglichen.

4. Paneel nach einem der Ansprüche 1 bis 3, **dadurch gekennzeichnet, dass** die Anschlüsse (8) - bzw. die wechselseitigen Anschlüsse (14) - in Form von Anschlusskontakten vorliegen und die wechselseitigen Anschlüsse (14) - bzw. die Anschlüsse (8) - in Form von konzentrischen Bahnen vorliegen.

5. Paneel nach Anspruch 4, **dadurch gekennzeichnet, dass** die Anschlusskontakte in Form von Kontaktstiften (19) vorliegen, die auf einer Feder (20) montiert sind, um so den elektrischen Kontakt mit jeder entsprechenden Bahn zu gewährleisten.

6. Paneel nach Anspruch 4, **dadurch gekennzeichnet, dass** die Anschlusskontakte in Form von Federklingen aus Metall vorliegen, die gegen die entsprechenden Bahnen drücken, um so einen elektrischen Kontakt mit den Bahnen zu gewährleisten.

7. Paneel nach einem der Ansprüche 4 bis 6, **dadurch gekennzeichnet, dass** sich die Bahnen nach Wunsch wie folgt erstrecken:
• entweder entlang zweier paralleler Winkelsektoren, wobei die Anschlusskontakte auf radialen Abmessungen angeordnet sind, die denen jedes der Sektoren entsprechen,
• oder entlang zweier Winkelsektoren, die in der Verlängerung zueinander angeordnet sind, wobei die Anschlusskontakte in zwei unterschiedlichen Winkelpositionen und entsprechend der radialen Abmessung der Sektoren angeordnet sind.

8. Paneel nach einem der vorhergehenden Ansprüche, **dadurch gekennzeichnet, dass** der Wandler (11) - bzw. der Ring (6) - mit einer kreisförmigen Zahnstange (16) versehen ist, die mit einem von dem Ring (6) - bzw. dem Wandler (11) - hervorstehenden Vorsprung (17) zusammenwirkt, wobei der Vorsprung (17) derart angeordnet ist, dass das Anschrauben des Befestigungsabschnitts (12) eine Schwellenkraft erfordert, mit der der Vorsprung von einer Kerbe (18) zur anderen der Zahnstange gelangt, um ein unbeabsichtigtes Abschrauben des Wandlers zu verhindern.

9. Paneel nach einem der vorhergehenden Ansprüche, **dadurch gekennzeichnet, dass** es ferner zwei Kabel (21) zum Anschließen an einen Verstärker umfasst, wobei die Kabel mit den Anschlüssen (8) verbunden sind, wobei das Paneel ferner einen im Kern (2) ausgebildeten Graben für den Durchgang der Kabel umfasst.

## Claims

1. A motor vehicle inner trim panel (1), said panel comprising a moulded core (2), said panel further comprising:
• a base (3) overmoulded by said core in an fixing zone (4), said base being provided with harpoon (5) projecting from said core,
• a ring (6) provided with receiving means (7) interlocking with said harpoon, so as to associate said ring with said base, said ring being further provided with two electric connectors (8) intended to be connected to the outputs of an amplifier, the central opening (9) of said ring being provided with a thread (10),
• an electrodynamic or magnetostrictive transducer (11) which is provided with an attachment portion (12) in the general form of a threaded cylinder screwed into said opening, the free end (13) of said attachment portion bearing in said zone so as to create a separation force between said ring and said base ensuring gripping contact between said harpoon and said receiving means, said transducer being further provided with two reciprocal electric connectors (14) on which each of said connectors bears respectively.

2. The panel according to claim 1, **characterized in that** the core (2) is based on rigid or semi-rigid polyurethane foam.

3. The panel according to one of claims 1 or 2, **characterized in that** the free end (13) is inscribed in a plane bearing in the fixing zone (4) lying in the same plane, so as to ensure surface contact between the two to optimise the transmission of the signal derived from the amplifier.

4. The panel according to any one of claims 1 to 3, **characterized in that** the connectors (8) - respectively or the reciprocal connectors (14) - are in the form of terminals and the reciprocal connectors (14) - respectively or the connectors (8) - in the form of concentric tracks.

5. The panel according to claim 4, **characterized in that** the terminals are in the form of studs (19) mounted on a spring (20), so as to ensure electrical contact with each corresponding track.

6. The panel according to claim 4, **characterized in that** the terminals are in the form of blades made of spring metal pressing against the corresponding tracks, so as to ensure electrical contact with said tracks.

7. The panel according to any one of claims 4 to 6, **characterized in that** the tracks extend:
• either according to two parallel angular sectors, the terminals being disposed at radial dimensions corresponding to those of each of said sectors,
• or according to two angular sectors disposed in the extension of one another, said terminals being disposed according to two different angular positions and according to the radial dimension of said sectors.

8. The panel according to any one of the preceding claims, **characterized in that** the transducer (11) - respectively or the ring (6) - is provided with a circular rack (16) cooperating with a lug (17) projecting from the ring - respectively or the transducer (11) -, said lug being arranged so that screwing of the attachment portion (12) requires a threshold force for said lug to pass from one notch (18) to another of said rack, in order to prevent inadvertent unscrewing of said transducer.

9. The panel according to any one of the preceding claims, **characterized in that** it further comprises two cables (21) for connection to an amplifier, said cables being connected to the connectors (8), said panel further comprising a trench for the passage of said cables formed in the core (2) .
